(19) Europäisches Patentamt
European Patent Office
Office européen des brevets

(11) Veröffentlichungsnummer: **0 191 926**
**B1**

# (12) EUROPÄISCHE PATENTSCHRIFT

(45) Veröffentlichungstag der Patentschrift: **31.01.90**

(51) Int. Cl.⁴: **C 08 G 59/42**, C 08 G 59/68, C 08 L 63/00

(21) Anmeldenummer: **85115637.2**

(22) Anmeldetag: **09.12.85**

## (54) Wärmehärtbare Epoxidharzmischungen.

(30) Priorität: **22.12.84 DE 3447251**

(43) Veröffentlichungstag der Anmeldung: **27.08.86 Patentblatt 86/35**

(45) Bekanntmachung des Hinweises auf die Patenterteilung: **31.01.90 Patentblatt 90/5**

(84) Benannte Vertragsstaaten: **CH DE FR GB IT LI**

(56) Entgegenhaltungen:
**CH-A- 401 473**
**FR-A- 1 584 526**
**FR-A- 2 260 604**
**US-A- 3 784 583**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Kerimis, Dimitrios, Dr., Pulheimer Strasse 15, D-5000 Köln 71 (DE)**
Erfinder: **Müller, Hanns Peter, Dr., Im Kerberich 6, D-5068 Odenthal (DE)**
Erfinder: **Uerdingen, Walter, Dr., Humperdinckstrasse 41, D-5090 Leverkusen 1 (DE)**
Erfinder: **Heine, Heinrich, Müritzstrasse 38, D-5090 Leverkusen 1 (DE)**

EP 0 191 926 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft wärmehärtbare Epoxidharzmischungen aus mindestens einem 1,2-Polyepoxid mit mehr als einer 1,2-Epoxidgruppe pro Molekül, mindestens einem cyclischen Carbonsäureanhydrid und mindestens einem Ammoniumphosphonat oder Ammoniumphosphat als Härtungskatalysator, sowie gegebenenfalls weiteren Hilfsstoffen.

Es ist bekannt, als Beschleuniger für die Polymerisation von 1,2-Polyepoxid-Carbonsäureanhydrid-Gemische tertiärer Amine, wie z.B. Dimethylbenzylamin oder Tris-(dimethylaminomethyl)-phenol zu verwenden. Sie ermöglichen zwar die gewünschten kurzen Härtezeiten bei erhöhten Temperaturen, jedoch sind sie bereits bei Raumtemperatur so wirksam, daß die Gebrauchsdauer infolge Viskositätsanstiegs auf wenige Stunden begrenzt wird.

Als latente Katalysatoren kennt man Bortrifluorid-Amin-Addukte. Jedoch hat diese Verbindungsklasse den Nachteil, daß sie im wesentlichen die Veretherungsreaktion der Epoxidharze katalysieren. Dadurch kann man keine Säureanhydridhärter verwenden, die zur Erzielung optimaler Formstoffeigenschaften erforderlich und zur Erniedrigung der Viskosität der flüssigen Epoxidharzmassen erwünscht sind.

Weiterhin sind als latente Katalysatoren für 1,2-Polyepoxid-Carbonsäureanhydrid-Gemische Phosphonium-di-methylphosphate und Ammoniumdimethylphosphate in Kombination mit Carbonsäuren bekannt (DE-OS 2 505 234 und US-PS 3 784 583). Diese können jedoch aufgrund ihrer Eigenschaften nur begrenzt eingesetzt werden, da sie bei saurer Katalyse durch Polyetherbildung zu schnell aushärten.

Es wurde nun gefunden, Ammoniumphosphate bzw. Ammoniumphosphonat-Katalysatoren als bei Wärme aktivierbare latente Katalysatoren für die Härtung von 1,2-Polyepoxid-Carbonsäureanhydrid-Gemischen zu verwenden. Diese besitzen die oben genannten Nachteile nicht.

Einer der Vorteile der erfindungsgemäßen Mischungen liegt in einer wesentlichen Vereinfachung und Rationalisierung der Gießharztechnologie. Die lange Gebrauchsdauer der Epoxidharzmassen erübrigt die Verwendung von aufwendigen und störungsanfälligen Gießharzverarbeitungsanlagen mit Chargen- oder Durchlaufmischern. Vielmehr läßt sich der Bedarf an Gießharzmassen für mehrere Tage durch einen einzigen Mischprozeß decken.

Mischungsfehler werden damit praktisch ausgeschlossen und Arbeitszeit wird eingespart. Mit besonderem Vorteil lassen sich die erfindungsgemäßen Gießharzmassen für die Spritzvergießverarbeitung nach der DE-OS 2 017 506 verwenden.

Gegenstand der Erfindung sind somit wärmehärtbare Epoxidharzmischungen aus mindestens einem 1,2-Polyepoxid mit mehr als einer 1,2-Epoxidgruppe pro Molekül, mindestens einem cyclischen Carbonsäureanhydrid und mindestens einem durch Wärme aktivierbaren Katalysator, dadurch gekennzeichnet, daß als Katalysatoren mindestens teilweise Verbindungen der Formel I

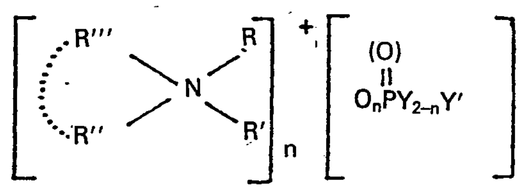

(I),

wobei
R = H,
R', R'', R''' = $C_1$–$C_6$-Alkyl-, $C_6$–$C_{10}$-Cycloalkyl- oder -Aryl-Gruppe, oder gemeinsam ein 5–7 C-Atome aufweisender Heterocyclus, in dem die C-Atome durch Heteroatome substituiert sein können und in welchem das quartäre N-Atom Teil des Rings ist,
Y und Y' = $C_1$–$C_6$-Alkoxy-, $C_1$–$C_6$-Alkylmercapto, $C_1$–$C_6$-Alkyl-, Aryl- oder Aryloxy-Gruppe, und
n = 1 oder 2
ist, verwendet werden in Mengen von 0,01 bis 20 Gew.-%, wobei Säuren als Cokatalysatoren nicht eingesetzt werden.

Die erfindungsgemäßen wärmehärtbaren Epoxidharzmischungen enthalten 0,01–20 Gew.-%, vorzugsweise 0,1–10 Gew.-%, der Verbindungen der Formel I. Sie können gegebenenfalls den Katalysator gemäß Formel I in Abmischung mit weiteren Katalysatoren in einer Menge von 5–100 Gew.-%, bezogen auf den Katalysator gemäß Formel I enthalten.

Vorzugsweise enthält die Mischung im Katalysator mindestens ein Ammoniumphosphat bzw. Ammoniumphosphonat.

In einer besonderen Ausführungsform können als Härtergemische Gemische aus einem oder mehreren cyclischen Dicarbonsäureanhydriden und Katalysatoren, die mindestens ein Ammoniumphosphat bzw. Ammoniumphosponat enthalten, zum Einsatz gelangen.

Die erfindungsgemäßen wärmehärtbaren Mischungen können als Gießharz-Formstoffe, als Konstruktions- und Isolierstoffe, z.B. für Isolatoren, Transformatoren, Kondensatoren, gedruckte Schaltungen, Schichtpreßstoffe, Chemierohre und -behälter, Sportgeräte, für den Bootsbau, u.a. verwendet werden.

Die erfindungsgemäßen Katalysatoren sind im allgemeinen Umsetzungsprodukte von

i) Alkylphosphaten oder Alkylphosphonaten der Formel (II)

$$(R')RO_nP(=(O))Y_{2-n}Y' \quad (II),$$

in welcher
R, oder wahlweise R', Y, Y' und n die bei Formel I beschriebene Bedeutung besitzen, mit

ii) Aminen, Amiden oder N-Heterocyclen der Formel (III)

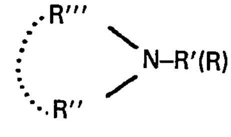

(III),

wobei
R', oder wahlweise R, R'' und R''' die bei Formel (I) angegebene Bedeutung haben.

Als Katalysatorkomponente (i) können teil- oder vollständig alkylierte Derivate der Phosphonsäure bzw. teilalkylierte Derivate der Phosphorsäure verwendet werden, wobei teilalkylierte Phosphorsäuren bevorzugt sind.

Beispiele von als Katalysatorkomponente (i) geeigneten P-Verbindungen sind Methanphosphonsäuredimethylester und Phosphorsäuredibutylester.

Bei der Katalysatorkomponente (ii) handelt es sich um N-haltige organische Verbindungen, z.B. primäre, sekundäre und tertiäre Amine, Amide und N-Heterocyclen. Typische Beispiele von als Katalysatorkomponente (ii) geeigneten N-Verbindungen sind Ammoniak, Triethylamin, Dibutylamin, Harnstoff, Melamin, Hydrazin, Triethylendiamin, Hexamethylentetramin, Morpholin, 1,5-Diazabicyclo[3.4.0]-nonen-5, 1,8-Diazabicyclo[5.4.0]undec-7-en, Hexamethylen-1,6-diamin, Mono-, Di- und Triethanolamin, Ethylendiamin, Pyridin und 1,4-Diaminocyclohexan.

Prinzipiell können lineare aund cyclische Verbindungen mit einer oder mehreren Amino-, Imino-, Epimino- oder Nitrilo-Gruppen als Katalysatorkomponente (II) verwendet werden.

Die Herstellung der erfindungsgemäß verwendbaren Katalysatoren erfolgt nach bekannten Verfahren (z.B. Houben-Weyl, Bd. XII/2, S. 262 ff.) durch Umsetzung der beispielhaft genannten Komponenten (i) und (ii) mit oder ohne Lösungsmittel bei Temperaturen von 100 bis 200°C. Dabei kann vorteilhaft sein, unter Inertgas und/oder Druck zu arbeiten.

Besonders bevorzugte Beispiele erfindungsgemäß verwendbarer Katalysatoren sind:

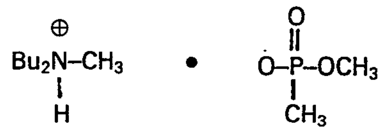

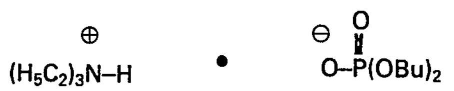

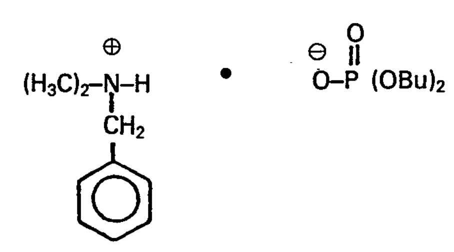

In einem Reaktionsgemisch aus 1,2-Polyepoxiden und cyclischen Säureanhydriden werden sie gegebenenfalls in Abmischungen untereinander, verwendet.

Bei Raumtemperatur feste Katalysatoren werden zweckmäßigerweise im Säureanhydrid-Härter gelöst und als Härter-Aktivator-Gemische verwendet.

Für die Durchführung des erfindungsgemäßen Verfahrens können eingesetzt werden:

Als 1,2-Polyepoxide aliphatische, cycloaliphatische, aromatische oder heterocyclische Verbindungen, die im Durchschnitt mehr als eine 1,2-Epoxidgruppe pro Molekül enthalten.

Verwendbare 1,2-Polyepoxidverbindungen können Polyglycidylether mehrwertiger Phenole sein, beispielsweise aus Brenzkatechin, Resorcin, Hydrochinon, aus 4,4'-Dihydroxydiphenylmethan, aus 4,4'-Dihydroxy-3,3'-dimethyldiphenylmethan, aus 4,4'-Dihydroxydiphenyldimethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromierungsprodukten der vorstehend genannten Diphenole, aus Novolakken (d. h. aus Umsetzungsprodukten von ein- oder mehrwertigen Phenolen mit Aldehyden, insbesondere Formaldehyd, in Gegenwart saurer Katalysatoren), aus Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. britisches Patent 1 017 612), aus Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z. B. N-Di-(2,3-epoxypropyl)-anilin, N,N'-Dimethyl-N,N'-diepoxypropyl-4,4'-diaminodiphenylmethan, N-Diepoxypropyl-4-amino-phenylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise aus 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N'-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, z. B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten. Außerdem seien Polymerisate von ungesättigten Monoepoxiden genannt, beispielsweise von Methacrylsäureglycidylester oder Allylglycidylether.

Vorzugsweise werden für das erfindungsgemäße Verfahren folgende Polyepoxidverbindungen oder deren Mischungen verwendet:

Polyglycidylether mehrwertiger Phenole, insbesondere aus Bisphenol A; Polyepoxidverbindungen auf der Basis von aromatischen Aminen, insbesondere Bis(N-epoxypropyl)-anilin, N,N'-Dimethyl-N,N'-diepoxypropyl-4,4'-diamino-diphenylmethan und N-Diepoxypropyl-4-amino-phenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexyhydrophthalsäureanhydrid und 1 Mol eines Polyols mit n Hydroxylgruppen (n = ganze Zahl von 2–6), insbesondere von 3 Mol Hexadrophthalsäureanhydrid und einem Mol 1,1,1-Trimethylolpropan, 3,4-Epoxycyclohexylmethyl-3,4-epoxycyclohexan-carboxylat.

Vorzugsweise können flüssige Polyepoxide eingesetzt werden oder niedrig viskose Diepoxide, wie bis(N-epoxypropyl)anilin oder Vinylcyclohexendiepoxid. Dies kann in besonderen Fällen die Viskosität von bereits flüssigen Polyepoxiden weiter herabsetzen oder feste Polyepoxide in flüssige Mischungen überführen.

Als Säureanhydride können gebräuchliche Di- und Polycarbonsäureanhydride verwendet werden. Vorzugsweise verwendet man flüssige oder leicht schmelzende Dicarbonsäureanhydride, wie z. B. Hexahydrophthalsäureanhydrid, Methylhexahydrophthalsäureanhydrid, Methyl-endomethylentetrahydrophthalsäureanhydrid, Methyltetrahydrophthalsäureanhydrid, Tetrahydrophthalsäureanhydrid; von den beiden letzteren sind die Isomerengemische besonders geeignet.

Die Härtung kann durch Vermischen der 1,2-Polyepoxid-Carbonsäureanhydrid-Gemische mit dem erfindungsgemäß verwendbaren Katalysator und gegebenenfalls weiteren Zusatzstoffen und Erhitzen auf höhere Temperaturen erfolgen.

Das Mischungsverhältnis wird zweckmäßigerweise so gewählt, daß auf eine 1,2-Epoxidgruppe etwa eine Anhydridgruppe entfällt; es kann auch mehr oder weniger Anhydrid (etwa 0,6–1,2 Mol Anhydridgruppe pro Epoxidgruppe) verwendet werden. Es ist auch möglich, weitere Carbonsäureanhydride oder Härtungsmittel zusätzlich zu verwenden.

Die Härtung kann bei Temperaturen von etwa 60°C bis 250°C, vorzugsweise 80°C bis 180°C durchgeführt werden.

Die Härtung kann auch zu einem beliebigen Zeitpunkt durch Abkühlung auf z. B. Raumtemperatur unterbrochen und zu einem späteren Zeitpunkt fortgesetzt werden. Zweckmäßig wird der Zeitpunkt der Unterbrechung der Umsetzung so gewählt, daß die beim Abkühlen (z. B. auf Raumtemperatur) erhaltene Mischung im B-Zustand vorliegt, d. h. fest ist, und bei späterem Aufheizen auf die Temperatur der endgültigen Aushärtung wieder flüssig bzw. unter Druck verformbar wird. Die Anwendung dieses zuletzt genannten Verfahrens ist besonders dann vorteilhaft, wenn als Anwendungsgebiete Schichtpreßstoffe, Preßmassen und Beschichtungsmassen, z. B. nach dem Wirbelsinterverfahren, in Betracht kommen.

Man kann der 1,2-Polyepoxidharzmasse Füllstoffe, wie Quarzmehl, Kreide, Aluminiumoxid, Pigmente wie Titandioxid, Eisenoxid, organische Pigmente wie Phthalocyaninpigmente, Flexibilisatoren wie Polyglykole, Polyetherglykol, Polyester mit endständigen Hydroxyl- und/oder Carboxylgruppen, Polysulfide, lösliche Farbstoffe, Verstärkungsmaterialien, wie z. B. Glasfasern, Gewebe oder Weichmacher, gegebenenfalls als Gemische beifügen.

Die erfindungsgemäßen Massen können als Gießharzformstoffe, z. B. als Konstruktions- und Isolierstoffe, z. B. für Isolatoren, Transformatoren, Kondensatoren, gedruckte Schaltungen, Schichtpreßstoffe, Chemierohre und -behälter, Sportgeräte, für den Bootsbau, u. a. verwendet werden.

Beispiele

Beispiel 1 (nicht erfindungsgemäß)

112 Gew.-Tle. Triethylendiamin (Dabco) und 1240 Gew.-Tle. Methanphosphonsäuredimethylester werden unter leichter Stickstoff-Durchleitung 8 Stunden bei 100°C gerührt. Anschließend werden im Vakuum zirka 400 Gew.-Tle. des überschüssigen Methanphosphonsäureesters abdestilliert, das ausgefallene Produkt abfiltriert und im Vakuum getrocknet. Man erhält 355 Gew.-Tle. einer farblosen, kristallinen Verbindung.

Beispiel 2

Herstellung einer erfindungsgemäß einzusetzenden Ammoniumverbindung

258 Gew.-Tle. Dibutylamin und 248 Gew.-Tle. Methanphosphonsäuredimethylester werden vermischt und unter Rühren auf 135 bis 150°C hochgeheizt. Nun wird mit einem Eisbad so gekühlt, daß durch die exotherme Reaktion die Temperatur auf 140–150°C gehalten wird. Anschließend rührt man bei 150°C noch 5 Stunden nach.

Das erhaltene Produkt wird durch Destillation im Vakuum von unumgesetzten Ausgangsprodukten befreit. Man erhält 350 Gew.-Tle. einer farblosen, viskosen Flüssigkeit, die mit der Zeit langsam kristallisiert.

Beispiel 3

Herstellung einer erfindungsgemäß einzusetzenden Ammoniumverbindung

210 Gew.-Tle. Dibutylphosphat und 101 Gew.-Tle. Triethylamin werden miteinander vermischt und 1 Stunde bei 60°C gerührt.

Beispiel 4

Herstellung einer erfindungsgemäß einzusetzenden Ammoniumverbindung

210 Gew.-Tle. Dibutylphosphat und 135 Gew.-Tle. Dimethylbenzylamin (Desmorapid DB)® werden miteinander vermischt und 1 Stunde bei 60°C gerührt.

Beispiel 5

100 Gew.-Tle. eines handelsüblichen Epoxidharzes auf Basis Hexahydropthalsäurediglycidylester mit einem Epoxidäquivalent von 160 und einer Viskosität von 900 mPas, gemessen bei 25°C (Lekutherm X 100), werden mit 100 Gew.-Tln. eines flüssigen Methylhexyhydrophthalsäureanhydrids mit einem Härteäquivalent von 168 und einer Viskosität von 40 mPas bei 25°C (Lekutherm® Härter M) und jeweils 2 Gew.-Tln. von verschiedenen Beschleunigern bei Raumtemperatur gemischt.

Ein Teil der Gemische wird abgetrennt und davon die Gelierzeit bei 160°C gemessen (Werte in Tabelle in Sekunden).

Von der Hauptmenge wird die Viskosität bei Raumtemperatur mit einem Flügelviskosimeter bestimmt (O-Wert in der Tabelle in mPas bei 25°C). Die Proben werden in luftdicht verschlossenen Behältern gelagert und die Viskositätsmessung nach 24 Stunden, 48 Stunden, 96 Stunden und 11 Tagen wiederholt. Die Werte sind in der Tabelle zu finden.

Die Gelierzeit liegt bei allen Produkten im etwa gleichen Bereich von 1 bis 2 Minuten. Beim Viskositätsaufbau ergeben sich deutliche Unterschiede, wobei die erfindungsgemäßen Katalysatoren erheblich höhere Topfzeiten aufweisen als die Vergleichssubstanzen.

| Erfindungsgemäßer Katalysator gemäß | Viskositätsaufbau in Abhängigkeit von der Zeit bei 25°C gemessen im Flügelviskosimeter [mPas] | | | | | Gelierzeit bei 160°C |
|---|---|---|---|---|---|---|
| | O-Wert | 24 h | 48 h | 96 h | 11 Tage | |
| Beispiel 1 | 540 | 750 | 780 | 1000 | 3200 | 125″ |
| Beispiel 2 | 420 | 580 | 660 | 800 | 12400 | 89″ |
| Beispiel 3 | 410 | 520 | 530 | 600 | 1300 | 113″ |
| Beispiel 4 | 400 | 530 | 620 | 850 | 26300 | 93″ |
| Standard-Katalysator (Dimethylbenzylamin) | 510 | 2480 | 27200 | zäh-viskos | fest | 56″ |
| Vergleichsbeispiele | | | | | | |
| A | 460 | 650 | 840 | 850 | fest | 57″ |
| B | 490 | 740 | 920 | 1600 | fest | 81″ |
| C | 440 | 610 | 760 | 1450 | fest | 79″ |

A = Triethylmethylammonium-dimethylphosphat

B = Trimethylbenzylammonium-dimethylphosphat

C = Tributylmethylphosphonium-dimethylphosphat

**Patentansprüche**

1. Wärmehärtbare Epoxidharzmischung aus 1,2-Polyepoxiden mit mehr als einer 1,2-Epoxidgruppe pro Molekül, einem oder mehreren cyclischen Carbonsäureanhydriden, Katalysatoren sowie gegebenenfalls Flexibilisatoren, Füllstoffen, Pigmenten, Fasern, Geweben und Farbstoffen, dadurch gekennzeichnet, daß als Katalysatoren mindestens teilweise Verbindungen der Formel (I)

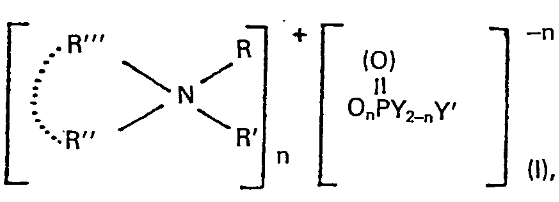

(I),

wobei

R = H,

R′, R″, R‴ = $C_1$–$C_6$-Alkyl-, $C_6$–$C_{10}$-Cycloalkyl- oder -Aryl-Gruppe, oder gemeinsam ein 5–7 C-Atome aufweisender Heterocyclus, in dem die C-Atome durch Heteroatome substituiert sein können und in welchem das quartäre N-Atom Teil des Rings ist,

Y und Y′ = $C_1$–$C_6$-Alkoxy-, $C_1$–$C_6$-Alkylmercapto-, $C_1$–$C_6$-Alkyl-, Aryl- oder Aryloxy-Gruppe, und

n = 1 oder 2

ist, verwendet werden in Mengen von 0,01 bis 20 Gew.-%, wobei Säuren als Cokatalysatoren nicht eingesetzt werden.

2. Wärmehärtbare Epoxidharzmischungen aus mindestens einem 1,2-Polyepoxid mit mehr als einer 1,2-Epoxidgruppe pro Molekül und mindestens einem cyclischen Carbonsäureanhydrid, dadurch gekennzeichnet, daß die Epoxidharzmischung den Katalysator, gemäß Formel (I) in Abmischung mit weiteren Katalysatoren in einer Menge von 5–100 Gew.-%, bezogen auf den Katalysator gemäß Formel (I) enthält.

3. Verfahren zum Wärmehärten von Epoxidharzmischungen aus Polyepoxiden mit mehr als einer Epoxidgruppe pro Molekül, gegebenenfalls Flexibilisatoren, Füllstoffen und Farbstoffen sowie Härtegemischen, dadurch gekennzeichnet, daß als Härtegemische Gemische aus einem oder mehreren cyclischen Carbonsäureanhydriden und Katalysatoren, die mindestens ein Ammoniumphosphat bzw. Ammoniumphosphonat gemäß Anspruch 1 enthalten, zum Einsatz gelangen.

4. Verwendung von Gießharz-Formstoffen nach Anspruch 1 als Konstruktions- und Isolierstoffe.

**Claims**

1. A hot-curing epoxy resin mixture of 1,2-polyepoxides containing more than one 1,2-epoxide group per molecule, one or more cyclic carboxylic anhydrides, catalysts and optionally flexibilizers, fillers, pigments, fibers and dyes, characterized in that compounds corresponding to formula (I)

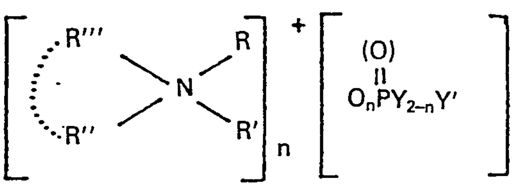
(I),

in which
R = H,
R′, R″ and R‴ = a $C_1$–$C_6$ alkyl, $C_6$–$C_{10}$ cycloalkyl or aryl group or together form a $C_{5-7}$ heterocycle in which the C atoms may be substituted by hetero atoms and in which the quaternary N atom is part of the ring,
Y and Y′ = $C_1$–$C_6$ alkoxy, $C_1$–$C_6$ alkylmercapto, $C_1$–$C_6$ alkyl, aryl or aryloxy group and
n = 1 or 2,
are at least partly used as catalysts in quantities of from 0.01 to 20% by weight, acids not being used as cocatalysts.

2. Hot-curing epoxy resin mixtures of at least one 1,2-polyepoxide containing more than one 1,2-epoxide group per molecule and at least one cyclic carboxylic anhydride, characterized in that the epoxy resin mixture contains the catalyst of formula (I) in admixture with other catalysts in a quantity of 5 to 100% by weight, based on the catalyst corresponding to formula (I).

3. A process for the hot-curing of epoxy resin mixtures of polyepoxides containing more than one epoxy group per molecule, optionally flexibilizers, fillers and dyes and also hardener mixtures, characterized in that the hardener mixtures used are mixturjes of one or more cyclic carboxylic anhydrides and catalysts containing at least one ammonium phosphate or ammonium phosphonate according to claim 1.

4. The use of the cast-resin molding materials claimed in claim 1 as construction and insulating materials.

**Revendications**

1. Mélange thermodurcissable à base de résines époxydiques consistant en 1,2-polyépoxydes à plus d'un groupe 1,2-époxyde par molécule, un ou plusieurs anhydrides d'acides carboxyliques cycliques, des catalyseurs et le cas échéant des agents flexibilisants, des matières de charge, des pigments, des fibres, des tissus et des colorants, caractérisé en ce qu'il contient en tant que catalyseurs, en partie au moins, des composés de formule I

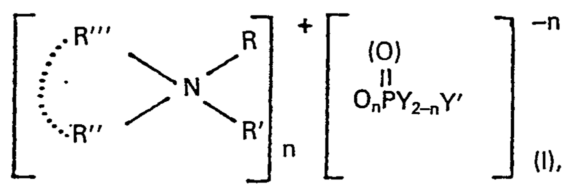
(I),

dans laquelle
R = H,
R′, R″, R‴ représentent des groupes alkyle en $C_1$–$C_6$, cycloalkyle en $C_6$–$C_{10}$ ou aryle ou forment ensemble un hétérocycle contenant 5 à 7 atomes de carbone dans lequel les atomes de carbone peuvent être substitués par des hétéroatomes et dans lequel l'atome d'azote quaternaire fait partie du cycle,
Y et Y′ représentent des groupes alcoxy en $C_1$–$C_6$, alkylmercapto en $C_1$–$C_6$, alkyle en $C_1$–$C_6$, aryle ou aryloxy, et
n = 1 ou 2,
en quantités 0,01 à 20% en poids, sans utilisation d'acides an tant que catalyseurs auxiliaires.

2. Mélanges thermodurcissables à base de résines époxydiques consistant en au moins un 1,2-polyépoxyde à plus d'un groupe 1,2-époxyde par molécule et au moins un anhydride d'acide carboxylique cyclique, caractérisés en ce que le mélange à base de résines époxydiques contient le catalyseur de formule I en mélange avec d'autres catalyseurs en quantités de 5 à 100% en poids par rapport au catalyseur de formule I.

3. Procédé pour thermodurcir des mélanges à base de résines époxydiques consistant en polyépoxydes à plus d'un groupe époxyde par molécule, le cas échéant des agents flexibilisants, des matières de charge et des colorants, ainsi que des mélanges de durcisseurs, caractérisé en ce que les mélanges de durcisseurs utilisés sont des mélanges d'un ou plusieurs anhydrides d'acides carboxyliques cycliques et de catalyseurs contenant au moins un phosphate d'ammonium ou phosphonate d'ammonium selon la revendication 1.

4. Utilisation des objets moulés à partir des résines à couler selon la revendication 1 en tant que matériaux de construction et matériaux isolants.